# EUROPEAN PATENT APPLICATION

(11) **EP 1 734 138 A1**
(43) Date of publication of application: **20.12.2006**
(21) Application number: 05720501.5
(22) Date of filing: 10.03.2005
(51) Int. Cl.: C22B 1/243, C22B 7/02

(54) **BRIQUETTE FOR RAW MATERIAL OF METAL AND METHOD FOR PRODUCTION THEREOF**

(30) Priority: 12.03.2004 JP 2004071191
(71) Applicant: JTEKT Corporation, Chuo-ku, Osaka-shi Osaka 542-8502 (JP)
(72) Inventor: MATSUDA, Mitsuma, 7611702 (JP)
(74) Representative: Sajda, Wolf E.
(86) International application number: PCT/JP2005/004230
(87) International publication number: WO 2005/087956

(57) **Abstract**

The invention provides a briquette for use as metal stock which provides an effective reuse of metal-bearing powder dust, as well as a method for manufacturing the briquette. Before or after the powder dust is compression molded, the powder dust is impregnated with a solidification assistant containing sodium silicate. Finally, the powder dust is dried.

## Description

### Technical Field

The present invention relates to a briquette for use as metal stock and a method for manufacturing the same. Particularly, the invention relates to a technique for effectively utilizing metal-bearing powder dust occurring in steelmaking/smelting processes or the like.

### Background Art

It is a general practice to use a collector for recovering the powder dust occurring in the steelmaking/smelting processes or the like. The recovery powder dust contains powder metal in an amount on the order of 75 to 95 wt%, offering a potentially effective resource as metal stock. Unfortunately, however, the powder dust is prone to scattering, leading to a disadvantage in the handling operations thereof such as transportation and storage. Particularly, powder dust bearing ferrous metal powder is prone to ignition and hence, the handling thereof is more difficult.
In this connection, there has been made a proposal about a process wherein the powder dust is admixed in powder coal which is admixed with a binder and then, the resultant mixture is hot formed into a briquette (see, for example, Japanese Unexamined Patent Publication No.265788/1998.

However, the above briquette is decreased in strength if a content of the powder dust exceeds 10 wt%. Hence, it is essential for the briquette to be composed mostly of the undesired powder coal. Accordingly, an attempt to reuse the powder dust more effectively is disadvantaged in terms of cost. In reality, therefore, the most of the powder dust is committed to landfill disposal as industrial waste.
Such a landfill disposal of the powder dust is not favorable from the standpoint of effectively utilizing the resources. What is more, the landfill disposal of the powder dust not only entails the environmental deterioration but also requires a high disposal cost.
In view of the foregoing, the invention has been accomplished and has an object to provide a briquette for use as metal stock which provides easy, low-cost reuse of the powder dust, as well as to provide a method for manufacturing the briquette.

### Disclosure of the Invention

According to the invention for achieving the above object, a briquette for use as metal stock is a dry briquette and is formed by solidifying metal-bearing powder dust using a solidification assistant containing at least one of sodium silicate and colloidal silica.
The briquette having such compositions is capable of exhibiting a proper mechanical strength because the solidification assistant comprises at least one of sodium silicate and colloidal silica. Hence, the briquette facilitates the handling operations thereof such as transportation and storage. Since a large quantity of powder dust can be solidified using a small quantity of solidification assistant, the briquette of good quality is manufactured at low costs.
Furthermore, the briquette is a dry, solid mass so that the briquette, when directly charged into a blast furnace, involves no risk of causing bumping or of being scatteringly carried upward to be discharged from the furnace. Accordingly, the briquette permits the powder dust to be reused as a less-expensive metal stock of good quality, thus contributing to the environmental conservation and to the reduction of the disposal cost of the powder dust.

The above briquette may preferably contain the above solidification assistant in an amount of 0.5 wt % to 5.0 wt%, so that the briquette can provide the metal stock of even higher quality.
The powder metal may be ferrous metal powder. In this case, the briquette can be used as a favorable steelmaking material.

According to the invention, a method for manufacturing a briquette for use as metal stock comprises: a step of impregnating water into metal-bearing powder dust; a step of compression molding the powder dust impregnated with water; a step of impregnating the compression molded powder dust with a solidification assistant containing at least one of sodium silicate and colloidal silica; and a step of drying the powder dust impregnated with the solidification assistant.
According to the method for manufacturing the briquette for use as metal stock which is constituted as described above, the powder dust impregnated with water is compression molded so that the powder dust can be solidified to such a degree as not to be detrimental to the handling operations such as transportation. Furthermore, the compression-molded powder dust is impregnated with the solidification assistant containing at least one of sodium silicate and colloidal silica and hence, a large quantity of powder dust can be rigidly solidified using a small quantity of solidification assistant.

According to another aspect of the invention, a method for manufacturing a briquette for use as metal stock comprises: a step of adding a solidification assistant containing at least one of sodium silicate and colloidal silica to metal-bearing powder dust; a step of compression molding the powder dust admixed with the solidification assistant; and a step of drying the compression-molded powder dust.
According to the method for manufacturing the briquette for use as metal stock which is constituted as described above, the compression molding of the powder dust permits the solidification assistant added thereto to permeate substantially into the overall mass of the powder dust. Accordingly, a large quantity of powder dust can be rigidly solidified using a small quantity of solidification assistant.

The above manufacture method of briquette may further comprise a step of impregnating the powder dust with the solidification assistant containing at least one of sodium silicate and colloidal silica, the step being interposed between the step of compression molding the powder dust and the step of drying the compression-molded powder dust. In this case, a briquette further increased in mechanical strength can be obtained.
In both of the above manufacturing methods, the powder metal may be ferrous metal powder. In this case, the above manufacturing methods are particularly preferred as a method for manufacturing a briquette for use as steelmaking material.

According to the methods for manufacturing the briquette for use as metal stock, which are constituted as described above, the powder dust can be solidified to a desired strength by impregnating the powder dust with the solidification assistant or by compression molding the powder dust. Hence, the briquette for use as metal stock can be manufactured easily and at low costs.

### Brief Description of the Drawings

FIG.1 is a step chart illustrating a method for manufacturing a briquette for use as metal stock according to one embodiment of the invention;
FIG.2 is a step chart illustrating a method for manufacturing a briquette for use as metal stock according to another embodiment of the invention;
FIG.3 is a step chart illustrating a method for manufacturing a briquette according to still another embodiment of the invention; and
FIG.4 is a partially cut-away perspective view showing a briquette.

### Best Modes for Carrying Out the Invention

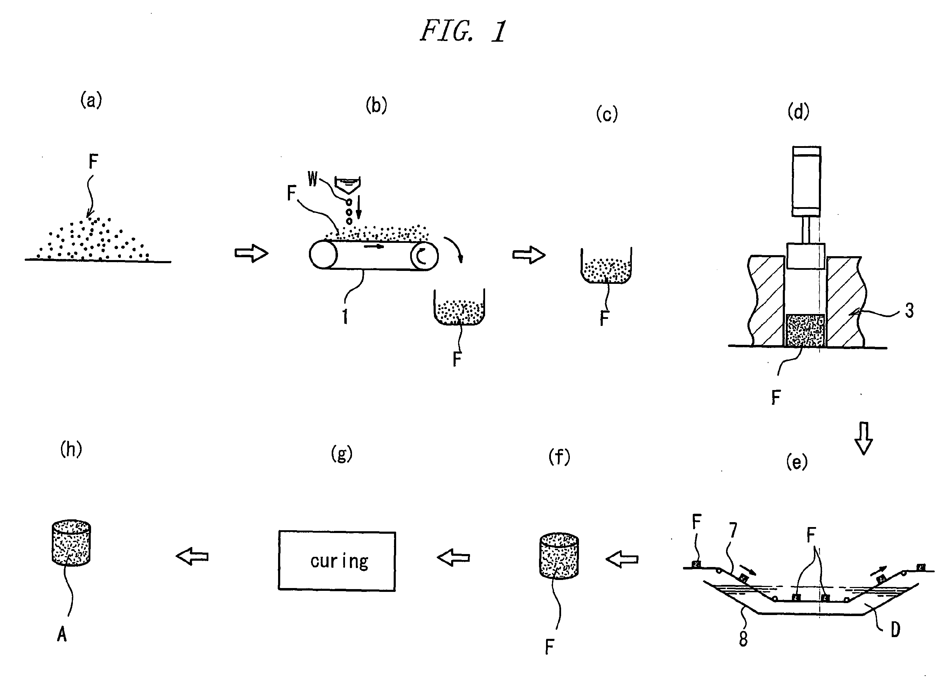

The preferred embodiments of the invention will be described hereinafter in details with reference to the accompanying drawings.
FIG. is a step chart illustrating a method for manufacturing a briquette for use as metal stock according to one embodiment of the invention. According to the manufacturing method of a briquette A, metal-bearing powder dust F (FIG. (a)) is carried on a belt conveyor 1, for example, while at the same time, water W is added dropwise to the powder dust **F** (FIG.1(b)). The powder dust **F** occurs in a steelmaking process and is recovered by means of a collector. The powder dust F contains 75 wt% to 95 wt% of ferrous metal powder.
Next, the powder dust F with the above solidification assistant D added dropwise is allowed to stand for, say one day, whereby the water W added dropwise is allowed to fully permeate into the powder dust F (FIG.1(c)).

Subsequently, a press is operated for compression molding the powder dust F in a mold 3, the powder dust having the above water **W** permeated therein (FIG.1(d)). The compression molding solidifies the powder dust **F** to such a strength as not to collapse when transported to the subsequent step.
Next, the compression-molded powder dust **F** is impregnated with the solidification assistant **D.** The solidification assistant **D** is impregnated by, for example, dipping the powder dust **F** in the solidification assistant **D** filled in a tank **8** as carrying the powder dust on a belt conveyor 7 (FIG.1(e)). The solidification assistant **D** filled in the tank **8** is a solution of sodium silicate diluted with water to a concentration on the order of 25 wt% to 35 wt%.

The powder dust **F** impregnated with the solidification assistant **D** (FIG.1(f)) is allowed to cure (dry) for say two days or so (FIG.(g)), whereby the solidification assistant **D** is solidified. Thus is obtained the briquette **A** for use as metal stock (FIG.1(h)). For curing, the powder dust may also be quickly cooled by applying thereto air blow at normal temperatures or cooled air blow.
The dry, porous briquette **A** can be manufactured by performing the above steps. The briquette **A** may preferably contain 95 wt% to 99.5 wt% of powder dust F and 0.5 wt% to 5.0 wt% of solidification assistant **D.** The compositions ensure the desired quality of the briquette as the steelmaking material and also provide an easy and rigid solidification of the powder dust **F.**
If the content of the solidification assistant **D** is less than 0.5 wt%, the resultant briquette has such a low mechanical strength as to be susceptible to fracture during transportation or other handling operations. If the content of the solidification assistant exceeds 5.0 wt%, the content of the ferrous metal is accordingly decreased and hence, the briquette is lowered in the quality as the steelmaking material.

The briquette **A** manufactured by performing the above steps is a porous mass formed by solidifying the powder dust **F,** such that the briquette can be readily and assuredly removed of water by curing. Therefore, when the briquette is directly charged into a blast furnace, the briquette involves no risk of causing bumping or of being scatteringly carried upward to be discharged from the furnace.
Furthermore, the briquette can exhibit a proper degree of mechanical strength to facilitate the handling operations thereof such as transportation and storage, because the briquette uses sodium silicate as the solidification assistant **D.** What is more, the briquette **A** is composed mostly of the powder dust **F** so that the briquette contains a substantial quantity of ferrous metal and is manufactured at low costs. Accordingly, the briquette permits the powder dust **F** to be reused as a less-expensive steelmaking material of high quality.

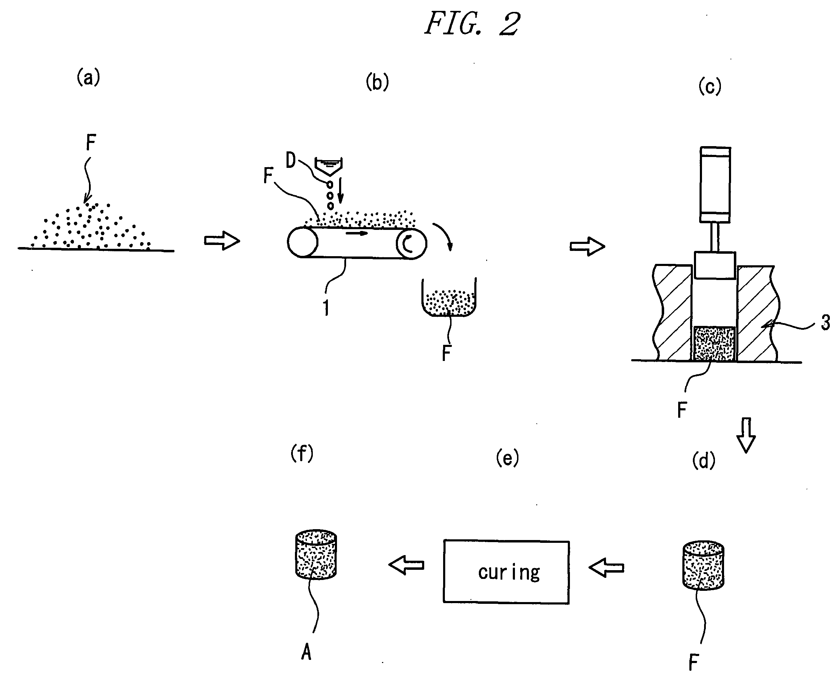

FIG.2 is a step chart illustrating a method for manufacturing a briquette according to another embodiment of the invention. According to the embodiment, the solidification assistant **D** is first added dropwise to the dust **F** bearing the ferrous metal powder (FIG.2(a)) being carried on, for example, the belt conveyor 1 (FIG.2(b)). A 30 to 50% sodium silicate solution is used as the solidification assistant **D.**

Subsequently, the press is operated for compression molding the powder dust **F** added with the solidification assistant **D** in the mold 3 (FIG.2(c)). In this step, the solidification assistant **D** added to the powder dust **F** is allowed to permeate substantially into the overall mass of the powder dust **F.**
The powder dust **F** impregnated with the solidification assistant **D** (FIG.2(d)) is allowed to cure (dry) for say two days (FIG.2(e)), thereby solidifying the solidification assistant **D.** Thus is obtained the briquette **A** for use as metal stock (FIG.2(f)). The dry, porous briquette **A** can be manufactured by performing the above steps.
It is also preferred that the briquette **A** contains an amount of 95 wt% to 99.5 wt% of powder dust **F** and 0.5 wt% to 5.0 wt% of solidification assistant **D.** The compositions ensure the quality of the briquette as the steelmaking material and also provide the easy and rigid solidification of the powder dust **F.**
According to this manufacturing method, the compression molding step permits the solidification assistant **D** to permeate substantially into the overall mass of the powder dust **F,** so that the briquette **A** as the final product may have a further increased mechanical strength.

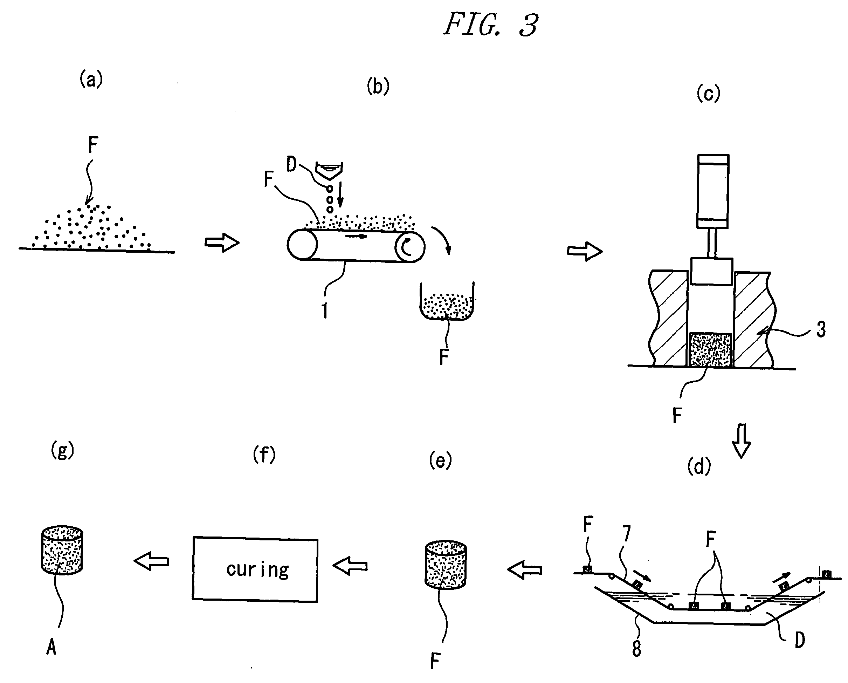

FIG.3 is a step chart illustrating a method for manufacturing a briquette according to still another embodiment of the invention. This embodiment differs from the embodiment shown in FIG.2 in that an additional step of impregnating the powder dust **F** with the solidification assistant **D** is interposed between the step of compression molding the powder dust **F** and the further step of drying the compression-molded powder dust **F.**
The solidification assistant **D** can be impregnated by, for example, dipping the compression-molded powder dust **F** in the solidification assistant **D filled** in the tank 8 as carrying the powder dust on the belt conveyor 7 (FIG.3D). The solidification assistant **D** filled in the tank 8 is a solution of sodium silicate diluted with water. This ensures that the solidification assistant **D** favorably permeates into the compression-molded powder dust **F.** The embodiment is adapted to further increase the mechanical strength of the briquette **A.**

Besides the aforesaid sodium silicate, colloidal silica and a mixture of sodium silicate and colloidal silica can be also used as the solidification assistant **D** in any of the above embodiments. Any of these solidification assistants is capable of readily and rigidly solidify the powder dust **F.**

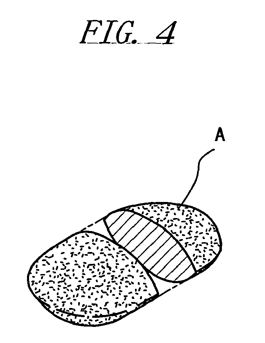

The briquette **A** may have not only a circular cylindrical shape shown in FIG.1 to FIG.3, but also a pillow-like shape, such as of eggs, almond, rugby ball and the like. The pillow-like shape has a rounded circumferential edge and is gradually increased in thickness from the circumferential edge toward its center (FIG.4).
Molding the powder dust into such a shape provides the briquette **A** which is hard to collapse against a compressive load and is less susceptible to partial fracture at its corner or the like.

The briquette **A** may also be formed by solidifying powder dust **F** bearing any of the various powder metals with the solidification assistant **D.** The powder metals include copper, lead, tin oxide, brass and the like, which occur in metal smelting processes. In this case, the briquette can be effectively reused as a metal stock according to the type of the powder metal.
Any of the briquettes A may preferably contain the powder dust **F** in an amount of 75 wt% or more from the standpoint of ensuring the quality as the metal stock.

## Claims

1. A dry briquette for use as metal stock formed by solidifying metal-bearing powder dust using a solidification assistant containing at least one of sodium silicate and colloidal silica.

2. The briquette for use as metal stock according to Claim 1, containing the solidification assistant in an amount of 0.5 to 5.0 wt%.

3. The briquette for use as metal stock according to Claim 1,
wherein the powder metal is ferrous metal powder.

4. A method for manufacturing a briquette for use as metal stock comprising:
a step of impregnating water into metal-bearing powder dust;
a step of compression molding the powder dust impregnated with water;
a step of impregnating the compression-molded powder dust with a solidification assistant containing at least one of sodium silicate and colloidal silica; and
a step of drying the powder dust impregnated with the solidification assistant.

5. A method for manufacturing a briquette for use as metal stock comprising:
a step of adding a solidification assistant containing at least one of sodium silicate and colloidal silica to metal-bearing powder dust;
a step of compression molding the powder dust admixed with the solidification assistant; and
a step of drying the compression-molded powder dust.

6. The method for manufacturing a briquette for use as metal stock according to Claim 5, further comprising a step of impregnating the powder dust with the solidification assistant containing at least one of sodium silicate and colloidal silica, the step being interposed between the step of compression molding the powder dust and the step of drying the compression-molded powder dust.

7. The method for manufacturing a briquette for use as metal stock according to Claim 4 or 5, wherein the powder metal is ferrous metal powder.
